# FASCICULE DE BREVET EUROPEEN

(11) **EP 0 499 510 B1**
(45) Date de publication et mention de la délivrance du brevet: **08.05.1996**
(21) Numéro de dépôt: 92400302.3
(22) Date de dépôt: 06.02.1992
(51) Int. Cl.: A01N 25/18, A01K 51/00

(54) **Composition acaricide utilisable contre la varroatose des abeilles et dispositif la renfermant**
Akarizides Mittel verwendbar gegen Varroatose der Bienen, und eine dieses enthaltende Vorrichtung
Acaricidal composition for use against varroatosis of bees, and device containing it

(30) Priorité: 11.02.1991 FR 9101529
(43) Date de publication de la demande: 19.08.1992
(73) Titulaire: Robert, Jean-Edouard, F-92200 Neuilly S/Seine (FR); Champseix, Henri, F-34980 Montferrier/Lez (FR); Collin, Bernard, F-37800 Sainte-Maure (FR); Maby, Joseph, F-37170 Chambray-les-Tours (FR)
(72) Inventeur: Robert, Jean-Edouard, F-92200 Neuilly S/Seine (FR); Champseix, Henri, F-34980 Montferrier/Lez (FR); Collin, Bernard, F-37800 Sainte-Maure (FR); Maby, Joseph, F-37170 Chambray-les-Tours (FR)
(74) Mandataire: Lhuillier, René

(56) Documents cités:
- FR-A- 2 501 007
- FR-A- 2 638 326
- CHEMICAL ABSTRACTS, vol. 107, no. 23, 7 Décembre 1987, Columbus, Ohio, US; abstract no. 213546X, R.KOSTECKI ET. AL.: 'Investigations on the varroacidal activity of some substances' page 218 ;

## Description

La présente invention concerne la lutte contre la parasitose des abeilles par le varroa. Plus particulièrement l'invention concerne un dispositif renfermant un mélange d'un acaricide et d'une substance attractive pour les abeilles et la mise en oeuvre de ce dispositif pour décontaminer les ruches.

Le varroa est un acarien, ectoparasite des abeilles. Le Varroa jacobsoni parasite l'abeille asiatique Apis cerana de manière équilibrée et sans mettre l'espèce en danger. L'introduction de l'espèce Apis mellifica en Asie et le développement du commerce des essaims d'abeilles et des reines ont favorisé la contamination de cette espèce par le varroa. L'adaptation du varroa à l'Apis mellifica s'est révélée létale pour celle-ci : une colonie contaminée peut être détruite en 2 ans. Sur l'espèce Apis mellifica, le varroa contamine l'abeille dès son stade larvaire : les varroas femelles s'installent dans le couvain de la ruche avant l'operculation des alvéoles. Quand les alvéoles sont operculées, les varroas se reproduisent sur les larves tout au long de leur cycle de dévelopnement. Quand l'abeille adulte sort de l'alvéole, elle est parasitée par plusieurs acariens et peut présenter des atrophies. Les parasites passent d'une abeille à l'autre au cours des contacts sociaux entre abeilles. La propagation du parasite se fait de plusieurs manières :
- par la dérive des ouvrières,
- par le pillage des ruches par les colonies les plus fortes,
- par les mâles qui peuvent être porteurs de varroas et qui sont acceptés dans toutes les ruches.

Le varroa se nourrit de l'hémolymphe de l'abeille ce qui l'affaiblit, diminue son activité et provoque sa mort précoce. De plus lors de sa prise de nourriture le varroa est capable de transmettre à l'abeille des microorganismes et des virus pathogènes.

La varroatose se propage depuis une vingtaine d'années dans le monde entier. Partie d'Asie, elle a progressivement touché l'Europe, l'Afrique et l'Amérique. En URSS, en 1971, par exemple, 55 000 colonies ont disparu. En Europe, la parasitose progresse d'environ 250 km par an. Sa première détection en France date de 1982.

Cette parasitose entraîne une importante diminution de la rentabilité des exploitations apicoles et de plus pose des problèmes sur le plan écologique et agronomique par la réduction du taux de pollinisation des fleurs de nombreuses variétés de plantes et d'arbres fruitiers.

Différents traitements sont déjà appliqués :
- le poudrage d'une zone intérieure de la ruche par des produits acaricides qui sont diffusés par l'activité de la colonie ;
- la fumigation avec diverses substances répulsives ou acaricides ;
- la pulvérisation ou l'aérosolisation d'émulsions à base de produit acaricide dans la ruche ;
- la mise en place, dans la ruche, de rubans en matière plastique qui diffusent de l'acaricide.

Dans une perspective d'avertissement, ces différentes méthodes peuvent généralement couplées à la mise en place, sur le plancher de la ruche, d'un "lange" en tissu imbibé de matière collante pour récolter et éliminer les acariens morts.

Les traitements ponctuels sous forme de poudrage, fumigation, et pulvérisation doivent être répétés régulièrement en dehors des périodes de couvain puisque les parasites présents dans le couvain operculé sont inaccessibles. De plus les colonies peuvent être recontaminées par des abeilles visiteuses ou par des contacts extérieurs avec des essaims sauvages parasités.

Parmi les produits chimiques de synthèse efficaces comme acaricides on peut citer principalement :
- le coumaphos (vendu par Bayer sous le nom de Perizin^{(M)}) qui s'utilise par aspersion des cadres de la ruche; la substance active est absorbée par les abeilles et est répartie dans toute la colonie au cours des échanges sociaux de nourriture. Ce produit ne peut être utilisé qu'en absence de couvain et en dehors de la période de miellée.
- l'amitraz, acaricide dont l'efficacité a été démontrée contre les tiques et autres acariens des bovins, des ovins et des animaux de compagnie et qui est également commercialisé pour le traitement des ruches par aérosol (vendu par Schering sous le nom d'anti-varroa^{(M)}). Ce produit est dangereux pour l'utilisateur et le dosage doit être soigneusement ajusté parce qu'il peut également tuer les abeilles.
- le fluvanilate, acaricide qui imprégne des lanières de chlorure de polyvinyle et diffuse lentement dans la ruche, permettant ainsi un traitement prolongé (vendu par Sandoz sous le nom d'Apistan^{(M)}).

L'évaporation du produit est dépendante des conditions climatiques et son efficacité est donc variable. Cette méthode est particulièrement efficace pour la décontamination des reines et l'expédition aux apiculteurs des cagettes contenant la reine avec quelques suiveuses.

Malgré l'existence de ces divers produits, de nombreuses recherches sont encore menées pour améliorer les méthodes de traitement afin de diminuer les risques de toxicité pour l'apiculteur ou pour les abeilles et de garantir l'absence de produit chimique dans le miel ou la cire.

De plus, des parasites résistant aux acaricides déjà utilisés peuvent toujours apparaître et il est prudent de continuer à développer des méthodes de traitement alternatives.

La présente invention repose sur un principe original quine vise ni l'attraction ni la répulsion des varroas mais l'attraction olfactive des abeilles vers un dispositif qui contient une composition acaricide, qui agit par contact et par diffusion sur les varroas portés par les abeilles attirées par une substance attractive appropriée contenue dans ladite composition. La quantité d'acaricide peut ainsi être réduite et localisée à un point précis, plus particulièrement dans la ruche, au centre du couvain ou sur un chemin de passage obligé des abeilles qui y pénètrent. Le dispositif peut rester en place pendant plusieurs semaines jusqu'à ce que la décontamination totale soit réalisée.

Comme dans d'autres méthodes, les varroas morts peuvent être recueillis sur un "lange" adsorbant placé sur le plancher de la ruche. Le comptage régulier des varroas permet d'évaluer l'efficacité du traitement et le degré de décontamination de la ruche. Cette méthode sert donc d'avertissement et de traitement.

La présente invention a été mise au point spécifiquement pour le traitement de la varroatose qui est le problème le plus aigu, actuellement, pour les apiculteurs. Il est évident que, en cas de nouvelle contamination épidémique, par un autre parasite, le même principe de traitement comprenant l'association d'une substance attractive pour les abeilles et d'une substance antiparasitaire ne constituerait qu'une variante de la présente invention.

Des substances attractives des abeilles ont déjà été analysées et décrites ; elles sont particulièrement étudiées pour favoriser la pollinisation et la colonisation des ruches au moment de l'essaimage.

Une substance attractive qui s'est révélée particulièrement efficace dans la colonisation des ruches est un mélange artificiel de trois constituants des phéromones sécrétées par la glande de Nasonov des abeilles ouvrières : le citral, le géraniol et l'acide nérolique en solution dans de l'hexane, utilisés à une dose correspondant à la secrétion de 5000 ouvrières.

Une dose plus faible de ce mélange a été incorporée dans la composition acaricide selon la présente invention de manière à attirer les abeilles de la colonie vers le dispositif qui contient cette composition.

Plus particulièrement, on utilise un mélange, en proportions égales, de citral et de géraniol, le mélange étant additionné aux autres constituants à raison de 0,05 % à 0,2 % en poids sec du mélange final. D'autres substances attractives pourraient encore être incorporées dans cette composition comme, l'acide géranique, le farnesol, les constituants de la gelée royale comme l'acide adipique, l'acide pinélique, l'acide subérique, l'acide hydroxy-4 benzoïque. (Voir l'article "Compounds which affect the behaviour of the honeybee Apis mellifera - Bee world 69-1988-104-123).

L'acaricide utilisé dans le mélange de la présente invention est préférentiellement l'amitraz, à une concentration n'excédant pas 10 % en poids sec du mélange final. L'amitraz peut être d'origine commerciale ou préparé selon la méthode décrite dans le brevet 2 073 091.

Un autre acaricide pourrait être utilisé de manière équivalente.

La substance à propriétés attractives pour les abeilles et l'acaricide sont incorporés dans un véhicule neutre. Selon un mode préféré de réalisation de l'invention, ce véhicule neutre est une poudre purifiée de polymère de polyvinylpolypyrrolidone (PVPP).

Les ingrédients actifs sont incorporés dans la masse du polymère par brassage à température élevée (de 60 à 80°C) dans un rapport final de 0,05 à 0,2 % de substance attractive, de 5 à 10 % d'amitraz et de 90 à 95 % de PVPP, les % étant exprimés en poids sec.

Pour être utilisée dans les ruches, la composition acaricide selon l'invention, qui se présente sous forme de poudre, doit être incorporée dans un dispositif empêchant sa dispersion dans la ruche et en particulier dans le miel.

Selon un mode de réalisation de l'invention, ce dispositif est un sachet en matériau microporeux, permettant la diffusion des ingrédients actifs.

Selon un mode de réalisation particulier, le sachet est fabriqué en polyéthylène et, après remplissage et thermosoudure, il est soumis à un chauffage, de préférence à 80°C pendant 4 heures, pour favoriser l'imprégnation du polyéthylène par les ingrédients actifs et ainsi augmenter l'efficacité de l'action acaricide par contact direct avec les abeilles.

Selon un autre mode de réalistion de l'invention, le dispositif est une plaque de polysorbate polymérisé dans laquelle la composition acaricide a été incorporée en cours de polymérisation, ce dispositif favorisant également le contact direct des abeilles avec l'acaricide.

Selon un mode préféré de réalisation de l'invention, ce polysorbate polymérisé renfermant la composition acaricide et attractive est moulé autour d'une bandelette grillagée en matière plastique semi-rigide qui en assure le support et le maintien au sein de la ruche et le rend plus résistant à la destruction par les abeilles.

La bandelette grillagée n'est imprégnée de polysorbate et de composition active que dans sa partie centrale, la partie supérieure servant à l'accrochage dans les rayons supérieurs de la ruche et la partie inférieure permettant le décrochage du dispositif par simple traction sans ouvrir la ruche.

La présente invention concerne également la mise en oeuvre du dispositif renfermant la composition décrite pour décontaminer les ruches parasitées par le Varroa Jacobsoni. Plus particulièrement l'invention concerne la mise en place du dispositif au sein de la ruche, sur un lieu de passage obligé des abeilles ouvrières. Le dispositif conçu pour la décontamination d'une ruche renferme une quantité de la composition attractif-acaricide-véhicule neutre comprise entre 1,5 et 15 grammes.

Les exemples suivants illustrent l'invention sans en limiter la portée.

### EXEMPLE 1 :

Une préparation commerciale de PVPP est repurifiée
- par trois traitements successifs par mise en contact avec deux volumes d'eau bouillante, filtration et essorage ;
- par un lavage à l'éthanol bouillant pour éliminer les traces d'eau résiduelles ;
- par séchage sous vide (1 mm de mercure) à 100°C pendant au moins 2 heures.

Après abaissement de la température entre 80 et 60°C et fermeture de la vanne de vide, les ingrédients actifs, préalablement mis en solution dans l'alcool, sont incorporés dans la masse du polymère, sans laisser pénétrer d'air dans le récipient, dans les proportions suivantes, exprimées en % du poids total,

| | |
|---|---|
| - amitraz | 5 % |
| - substance attractive (comprenant en proportions 1:1, du citral et du géraniol) | 0,05 % |

Les substances attractives sont d'origine commerciale (Index Merck Nos 2293 et 4263).

Le mélange est maintenu à 80°C sous brassage continu pendant 8 heures puis la température est ramenée à la normale et de l'air préalablement déshumidifié est introduit dans l'enceinte.

La poudre ainsi obtenue sera conditionnée selon le mode d'utilisation choisi, comme décrit dans les exemples suivants (2 à 4).

### EXEMPLE 2 :

La poudre obtenue par le procédé décrit dans l'exemple 1 est conditionnée en sachets de polyéthylène à basse densité ou en sachets de matière tissée ou non tissée microporeuse.

On dispense de 1,5 à 15 grammes de poudre par sachet.

### EXEMPLE 3 :

Pour favoriser le contact des abeilles avec l'acaricide, les sachets en polyéthylène, chargés de 15 grammes de poudre, sont thermosoudés puis chauffés à 80°C pendant 4 heures, pour favoriser la diffusion de l'acaricide dans le polyéthylène.

### EXEMPLE 4 :

La poudre obtenue par le procédé décrit dans l'exemple 1 est incorporée dans du polysorbate, substance non toxique, polymérisable à froid et qui forme une plaque assez résistante pour ne pas être détériorée par les abeilles.

La solution de polysorbate comprend :

| | |
|---|---|
| de l'eau déminéralisée | 68 % |
| de l'alcool polyvinylique | 10 % |
| du polysorbate 20 | 2 % |
| de l'éthanol absolu | 20 % |

L'alcool polyvinylique est dissous dans l'eau à 70°C sous agitation mécanique. Puis la température est abaissée à 30°C pour ajouter le polysorbate et l'éthanol.

On incorpore ensuite 15 g de poudre obtenue par le procédé décrit dans l'exemple 1, dans 85 g de solution de polysorbate ; quand la solution est homogène, on l'étale sur un plateau siliconé de manière à former une couche de 2 mm. La polymérisation est terminée après 4 jours. On obtient des plaques blanches, granuleuses, souples et élastiques. Le matériau obtenu est ensuite découpé en bandelettes dont la taille est déterminée en fonction de la dose d'amitraz choisie pour le traitement d'une ruche.

### EXEMPLE 5 :

Un dispositif mécanique est utilisé pour rigidifier ou "armer" les bandelettes décrites dans l'exemple 4. On utilise un fin grillage en matière plastique semi-rigide (comme du polyéthylène de "qualité alimentaire", d'origine commerciale) qui répond aux critères suivants :
- semi-rigide pour faciliter son introduction dans la ruche et son retrait ;
- mémorisant un pliage destiné à faciliter sa fixation dans les rayons ;
- favorisant l'adhésion et la cohésion du polymère contenant la composition active, pour empêcher son arrachage ou son écaillage par les abeilles.

Ainsi, dans un grillage à mailles carrées de 5 mm de côté, on découpe des bandelettes de 420 mm de long et de 15 mm de large, ces dimensions étant compatibles avec tous les modèles de ruches couramment disponibles. La composition active incorporée dans le polysorbate n'est mise à polymériser qu'autour de la partie centrale de la bandelette, sur une longueur de 150 mm, c'est-à-dire qu'on laisse d'un côté 60 mm, de l'autre 210 mm de grillage vierge de substance active.

Ainsi, quel que soit le format de la ruche, la partie imprégnée de composition active sera placée au niveau des deux tiers inférieurs des cadres et la partie supérieure vierge, sera accrochée entre les rayons supérieurs et adaptée, par des pliures appropriées, à l'épaisseur des rayons et à la taille de la ruche. Ces manipulations laissent l'apiculteur à l'abri de tout contact avec la substance active. La zone non imprégnée, de 60 mm, qui dépasse de la partie inférieure du cadre de la ruche permet de retirer le dispositif quand le traitement est terminé, sans ouvrir la ruche, par simple crochetage par la fente de sortie des abeilles, au niveau de la planche d'envol.

La facilité de manipulation due à la semi-rigidité de ce dispositif permet un gain de temps considérable au moment de la mise en place comme au moment de son décrochage. Ceci est particulièrement important pour les traitements par temps froid parce qu'un refroidissement à 10°C peut tuer tout le couvain.

Le gain de temps, pour des exploitations pouvant atteindre 4000 ruches, est aussi un avantage appréciable

### EXEMPLE 6:

Les différents conditionnements décrits dans les exemples 2 à 5 sont contrôlés
- pour la quantité d'ingrédients actifs présents
- pour la stabilité des ingrédients actifs au cours du temps.

a) Les quantités d'acaricide et de substance attractive sont contrôlées en chromatographie liquide à haute performance après extraction par un solvant organique (éthanol absolu ou acétone), par référence à des échantillons témoins fraîchement préparés et dosés.
b) Une cinétique de disparition des ingrédients actifs au cours du temps, par le même dosage qu'en a), est réalisée sur les différents conditionnements maintenus dans des conditions de température et d'humidité reproduisant celles de la ruche, c'est-à-dire une enceinte thermostatée à 32°C et avec une humidité relative de 90%. Après 6 semaines, il reste plus de 70% de la concentration initiale des différents constituants.

### EXEMPLE 7 :

L'efficacité et l'innocuité de la méthode de traitement sont évaluées dans des ruches contaminées.

### a) Efficacité.

Le dispositif est placé dans la ruche au sein du couvain.

Pour mesurer l'efficacité du traitement, selon la méthode classique, on place sur le plancher de la ruche un "lange" imbibé de matière collante qui recueille les varroas morts et on les dénombre au cours du temps.

On peut considérer que le traitement a entraîné l'élimination totale des parasites quand on ne recueille plus aucun varroa pendant 3 jours. Cette décontamination totale est atteinte en moins de 30 jours.

Le tableau suivant montre la mortalité des Varroas dans 20 ruches surveillées pendant 24 jourss. Le jour 0 correspond à la pose de la bandelette imprégnée de la composition active décrite dans l'exemple 5.

Voir tableau page suivante

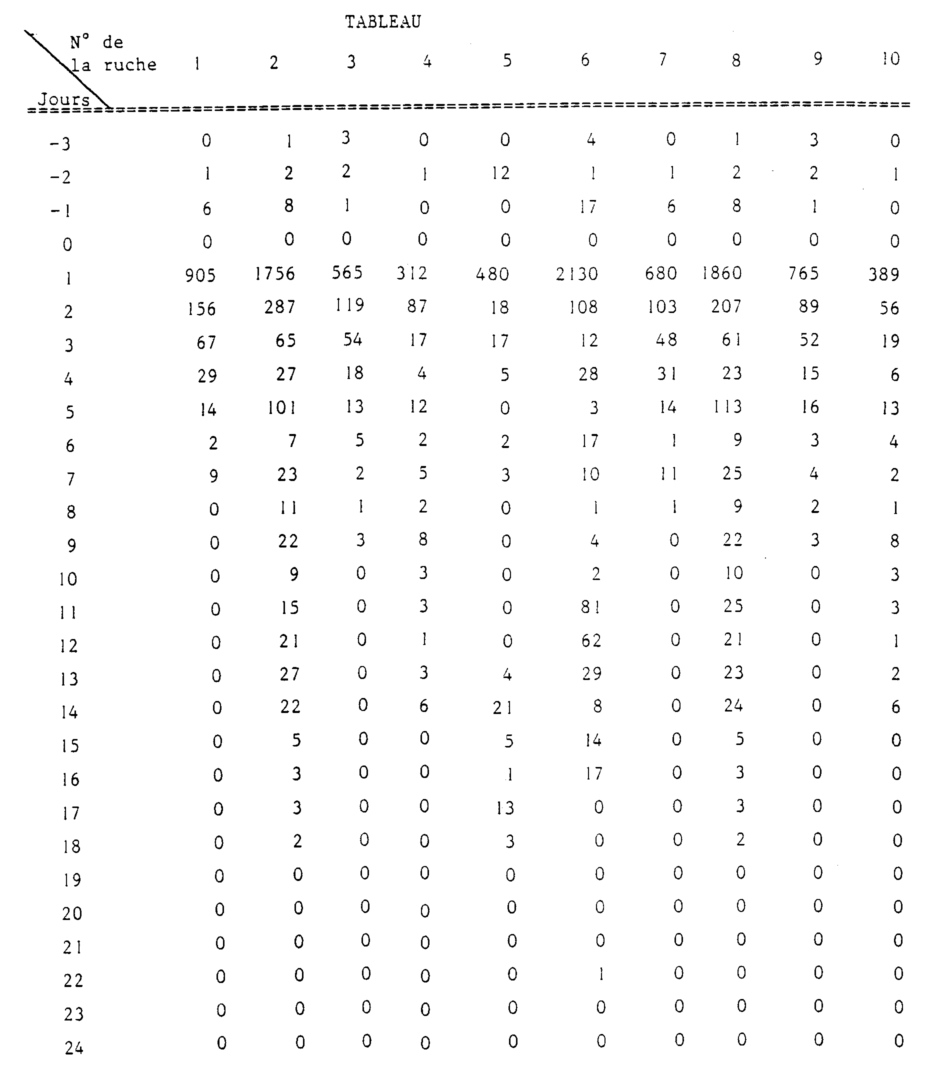

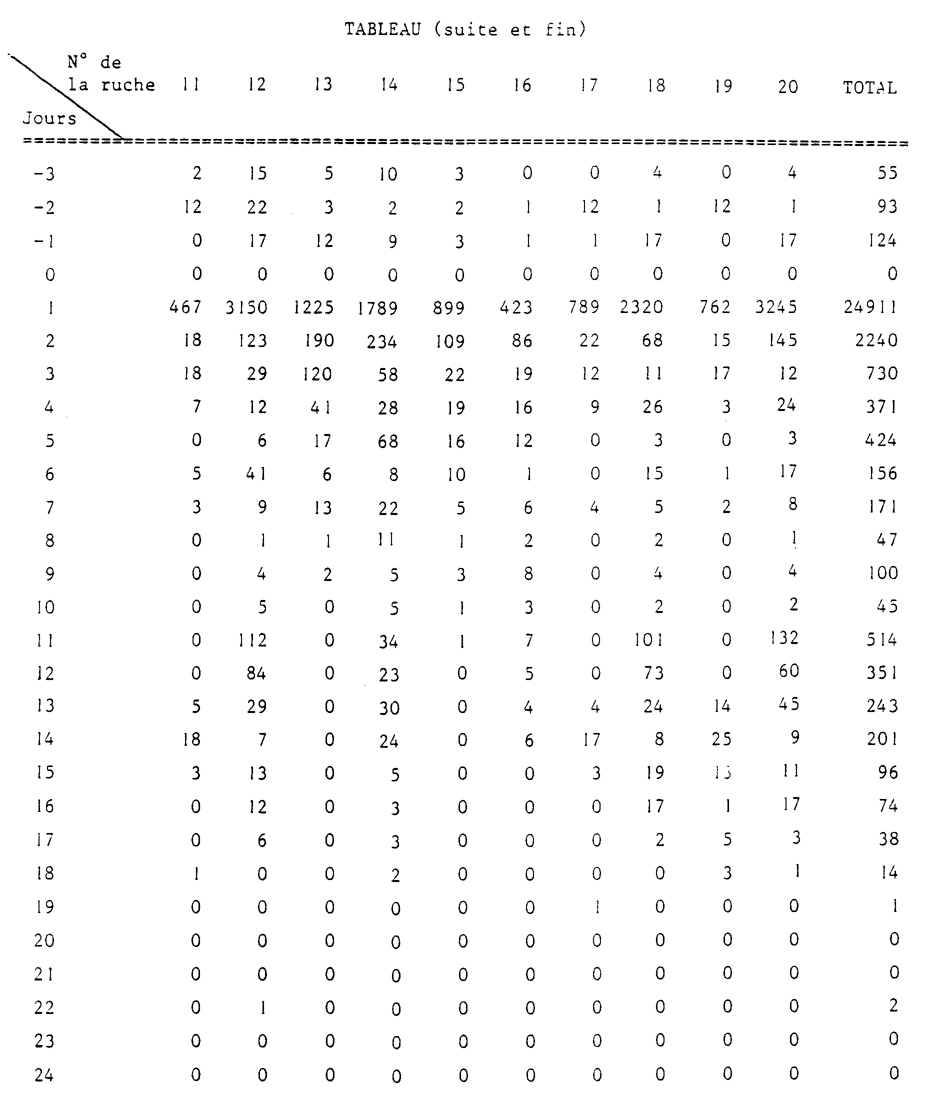

### b) Innocuité.

Dans les essais préliminaires plusieurs dosages d'amitraz ont été testés et un surdosage a entraîné la mort de plusieurs colonies.

Avec le dosage retenu, c'est-à-dire n'excédant pas 750 mg par conditionnement destiné à une ruche, on n'observe aucune mortalité anormale des abeilles ni aucune modification de leur activité ou de leur comportement.

Dans un test de contrôle, une dose de poudre libre (ni conditionnée en sachet ni incorporée dans un polymère solide) a été répandue dans la ruche ; même dans ces conditions, on n'a pas observé de mortalité des abeilles.

## Revendications

1. Composition acaricide destinée à la décontamination des élevages d'abeilles caractérisée en ce qu'elle comprend, outre l'acaricide capable de tuer les parasites, une substance à propriétés attractives pour les abeilles et un véhicule neutre.

2. Composition acaricide selon la revendication 1, caractérisée en ce que la substance à propriétés attractives pour les abeilles est un mélanine de citral et de géraniol, en proportions égales, la quantité totale de ce mélange étant comprise entre 0,05 et 0,2% du poids sec du mélange total.

3. Composition acaricide selon la revendication 1 ou 2, caractérisée en ce que l'acaricide est l'amitraz, à une concentration finale comprise entre 5 et 10 % du poids sec du mélange.

4. Composition acaricide selon l'une quelconque des revendications 1 à 3, caractérisée en ce que le véhicule neutre est une poudre purifiée de polymère de polyvinylpolypyrrolidone.

5. Procédé de préparation d'une composition acaricide selon l'une quelconque des revendications 1 à 4, caractérisé en ce qu'on effectue un brassage à chaud des ingrédients attractifs avec la poudre de polymère.

6. Procédé selon la revendication 5, caractérisé en ce qu'on effectue le brassage des ingrédients actifs avec la poudre de polymère à une température de 60 à 80°C pendant 8 heures.

7. Dispositif d'application d'une composition acaricide selon l'une quelconque des revendications 1 à 4 consistant en un support ou un contenant pouvant, sans danger pour les abeilles, être placé au sein de la ruche, caractérisé en ce qu'il est constitué par un sachet en matériau microporeux empêchant la dispersion de la composition acaricide dans la ruche.

8. Dispositif selon la revendication 7, caractérisé en ce que le matériau microporeux est un polyéthylène.

9. Procédé de traitement d'un dispositif selon la revendication 7 ou 8, caractérisé en ce que le sachet renfermant la composition acaricide est chauffé à 80°C pendant 4 heures.

10. Dispositif d'application d'une composition acaricide selon l'une quelconque des revendications 1 à 4 consistant en un support ou un contenant pouvant, sans danger pour les abeilles, être placé au sein de la ruche, caractérisé en ce qu'il est constitué d'une plaque polymérisée de polysorbate.

11. Dispositif selon la revendication 10, caractérisé en ce que la plaque polymérisée de polysorbate est moulée autour d'une bandelette grillagée en matière plastique semi-rigide.

12. Dispositif selon la revendication 11, caractérisé en ce que la plaque polymérisée de polysorbate n'est intégrée que dans la zone centrale de la bandelette grillagée et que les deux extrémités de celle-ci qui sont vierges de toute substance active servent à l'accrochage et au décrochage du dispositif au sein de la ruche.

13. Dispositif selon l'une quelconque des revendications 7, 8 et 10 à 12 contenant la dose de composition acaricide nécessaire pour le traitement d'une ruche, caractérisé en ce qu'il renferme une quantité de ladite composition acaricide comprise entre 1,5 et 15 grammes en poids sec.

## Claims

1. Acaricidal composition designed to decontaminate beehive plants, characterized in that it includes, in addition to the acaricide capable or killing the parasites, a substance with properties attractive to the bees and a neutral carrier.

2. Acaricidal composition according to claim 1, characterized in that the substance having bee attracting properties is a mixture of citral and geraniol, in equal proportions, the total quantity of this mixture representing between 0.05 and 0.2% of the dry weight of the total mixture.

3. Acaricidal composition according to claim 1 or 2, characterized in that the acaricide is amitraz, in a final concentration of between 5 and 10% of the dry weight of the mixture.

4. Acaricidal composition according to any one of claims 1 to 3, characterized in that the neutral vehicle is a purified powder of polyvinylpolypyrrolidone polymer.

5. Process for preparing an acaricidal composition according to any one of claims 1 to 4, characterized in that the attracting ingredients are hot stirred with the polymer powder.

6. Process according to claim 5, characterized in that the active ingredients are stirred with the polymer powder at a temperature of 60 to 80°C for 8 hours.

7. Device for applying an acaricidal composition according to any one of claims 1 to 4 consisting of a support or a container able, without danger to the bees, to be placed inside the hive, characterized in that it is constituted by a sachet made of microporous material preventing the acaricidal composition from being dispersed throughout the hive.

8. Device according to claim 7, characterized in that the microporous material is a polyethylene.

9. Process for treating a device according to claim 7 or 8, characterized in that the sachet containing the acaricidal composition is heated at 80°C for 4 hours.

10. Device for applying an acaricidal composition according to any one of claims 1 to 4 consisting of a support or a container able, without danger to the bees, to be placed inside the hive, characterized in that it is constituted by a polymerized sheet of polysorbate.

11. Device according to claim 10, characterized in that the polymerized plate of polysorbate is moulded about a mesh like strip of semirigid plastic material.

12. Device according to claim 11, characterized in that the polymerized sheet of polysorbate is integrated only in the central zone of the mesh like strip and that the two ends of the latter, which are free of any active substance, serve to fasten and unfasten the device inside the hive.

13. Device according to any one of claims 7, 8 and 10 to 12 containing the dose of acaricidal composition necessary for treating a hive, characterized in that it contains a quantity of the said acaricidal composition of between 1.5 and 15 grams in dry weight.

## Patentansprüche

1. Akarizide Zusammensetzung für die Entseuchung von Bienenzuchten, **dadurch gekennzeichnet**, daß sie neben dem Akarizid, das die Parasiten töten kann, eine Substanz mit die Bienen anziehenden Eigenschaften und einen neutralen Träger umfaßt.

2. Akarizide Zusammensetzung nach Anspruch 1, **dadurch gekennzeichnet**, daß die Substanz mit die Bienen anziehenden Eigenschaften ein Gemisch aus Citral und Geraniol in gleichen Anteilen ist, wobei die Gesamtmenge dieses Gemisches zwischen 0,05 und 0,2 % des Trockengewichtes des gesamten Gemisches beträgt.

3. Akarizide Zusammensetzung nach Anspruch 1 oder 2, **dadurch gekennzeichnet**, daß das Akarizid Amitraz in einer Endkonzentration zwischen 5 und 10 % des Trockengewichts des Gemisches ist.

4. Akarizide Zusammensetzung nach einem der Ansprüche 1 bis 3, **dadurch gekennzeichnet**, daß der neutrale Träger ein gereinigtes Polymerpulver aus Polyvinylpolypyrrolidon ist.

5. Verfahren zur Herstellung einer akariziden Zusammensetzung nach einem der Ansprüche 1 bis 4, **dadurch gekennzeichnet**, daß die anziehenden Inhaltsstoffe mit dem Polymerpulver in der Wärme verrührt werden.

6. Verfahren nach Anspruch 5, **dadurch gekennzeichnet**, daß die wirksamen Inhaltsstoffe mit dem Polymerpulver bei einer Temperatur von 60 bis 80 °C 8 Stunden lang verrührt werden.

7. Vorrichtung zur Anwendung einer akariziden Zusammensetzung nach einem der Ansprüche 1 bis 4, bestehend aus einem Träger oder einem Behälter, der ohne Gefahr für die Bienen im Inneren des Bienenstocks angebracht werden kann, **dadurch gekennzeichnet**, daß er aus einem Säckchen aus mikroporösem Material besteht, welches die Verteilung der akariziden Zusammensetzung im Bienenstock verhindert.

8. Vorrichtung nach Anspruch 7, **dadurch gekennzeichnet**, daß das mikroporöse Material ein Polyethylen ist.

9. Verfahren zur Behandlung einer Vorrichtung nach Anspruch 7 oder 8, **dadurch gekennzeichnet**, daß das Säckchen, welches die akarizide Zusammensetzung einschließt, 4 Stunden lang auf 80 °C erwärmt wird.

10. Vorrichtung zur Anwendung einer akariziden Zusammensetzung nach einem der Ansprüche 1 bis 4, bestehend aus einem Träger oder einem Behälter, welcher ohne Gefahr für die Bienen im Inneren des Bienenstocks angebracht werden kann, **dadurch gekennzeichnet**, daß er aus einer polymerisierten Polysorbatplatte besteht.

11. Vorrichtung nach Anspruch 10, **dadurch gekennzeichnet**, daß die polymerisierte Polysorbatplatte um einen mit einem Gitter versehenen Flachstab aus halbsteifem Kunststoff herumgegossen ist.

12. Vorrichtung nach Anspruch 11, **dadurch gekennzeichnet**, daß die polymerisierte Polysorbatplatte nur in den mittleren Bereich des mit einem Gitter versehenen Flachstabs integriert ist und daß seine beiden Enden, welche keinerlei Wirkstoff enthalten, dazu dienen, die Vorrichtung in das Innere des Bienenstocks einzusetzen oder herauszunehmen.

13. Vorrichtung nach einem der Ansprüche 7, 8 und 10 bis 12, enthaltend die zur Behandlung eines Bienenstocks erforderliche Dosis der akariziden Zusammensetzung, **dadurch gekennzeichnet**, daß sie eine Menge der akariziden Zusammensetzung zwischen 1,5 und 15 g Trockengewicht umfaßt.
